# EUROPEAN PATENT SPECIFICATION

(11) **EP 4 216 585 B1**
(45) Date of publication and mention of the grant of the patent: **09.09.2026**
(21) Application number: 22152502.5
(22) Date of filing: 20.01.2022
(51) Int. Cl.: H04W 4/90, H04W 4/06, H04W 4/12

(54) **PUBLIC WARNING SYSTEM AND METHOD OF BROADCASTING CONTENT**
ÖFFENTLICHES WARNSYSTEM UND VERFAHREN ZUM SENDEN VON INHALTEN
SYSTÈME D'AVERTISSEMENT PUBLIC ET PROCÉDÉ DE DIFFUSION DE CONTENU

(43) Date of publication of application: 26.07.2023
(73) Proprietor: Rohde & Schwarz GmbH & Co. KG, 81671 München (DE)
(72) Inventor: Oestreicher, Lars, 81671 München (DE)
(74) Representative: Novagraaf Group

(56) References cited:
- US-A1- 2014 050 137
- US-A1- 2014 187 192
- US-A1- 2016 247 383
- US-A1- 2019 190 662
- "Earthquake Early Warning Systems", 1 January 2007, SPRINGER BERLIN HEIDELBERG, Berlin, Heidelberg, ISBN: 978-3-540-72240-3, article NAKAMURA YUTAKA ET AL: "UrEDAS, the Earthquake Warning System: Today and Tomorrow", pages: 249 - 281, XP093127136, DOI: 10.1007/978-3-540-72241-0_13

## Description

The invention relates to a public warning system for broadcasting content. Further, the invention relates to a method of broadcasting content by means of a public warning system.

In the state of the art, public warning systems are known that are used to warn the public concerning a certain danger, for instance natural disasters like earthquakes, floods, thunderstorms, firestorms and similar.

In general, public warning systems should alert and inform all citizens that are threatened by the danger with the purpose of enabling them to prepare and to act in a timely manner to reduce the impact of the danger. This implies that the systems applied for public warning must alert the people, but also provide them sufficient information in an understandable manner. The effectiveness of public warning systems to achieve this goal is highly dependent on the communication channels used, as different communication systems have uneven capabilities to fulfill all public warning requirements and diversity is required to reach the maximum of people at risk. Those public warning systems are also called civilian warning systems, as they are used to warn the civilization appropriately with respect to an upcoming danger.

The public warning systems known typically comprise alarm sirens for civil protection, namely electronic sirens. The respective sirens output a characteristic audio signal to warn the civilization concerning the future danger. Despite the sirens, it is also known that the public warning systems comprise warning lights, e.g. in addition to the sirens, which output an optical signal for warning the civilization concerning the upcoming danger.

However, it has turned out that the public becomes only aware of a certain danger due to the activation of the respective sirens and/or warning lights, but the people do not know what particular kind of danger is to be expected. Therefore, it is not clear to the people how to react correctly with regard to the upcoming danger. Hence, the known public warning systems do not effectively lead to proper reactions of the people. Therefore, the warnings are not effective as the people do not know how to properly react, which is also caused by the nescience about the kind of future danger.

In order to overcome this issue, it is also known to use regular internet services that require software applications to be installed on smartphones or similar devices such that the subscribers of the respective internet services may obtain further information via the applications on their smartphones. However, these regular internet services require internet access of the respective smartphones, which may not be guaranteed in case of a catastrophic situation, e.g. due to a blackout affecting the regular mobile network infrastructure used for the regular internet services.

Therefore, there is a need for an efficient and fail-safe public warning system that ensures appropriate warning of the civilization in case of danger.

US 2014/187192 A1, US 2019/190662 A1, US 2014/050137 A1, and US 2016/247383 A1 disclose generic broadcast techniques.

The objective technical problem to be solved may be considered to consist in overcoming or at least reducing the disadvantages according to the prior art.

The problem is solved by the subject matter of the independent claims.

The invention provides a public warning system for broadcasting content, wherein the public warning system comprises a 5G-based or LTE-based broadcast infrastructure configured to broadcast content to all warning devices in a coverage area of the broadcast infrastructure. The public warning system comprises a broadcast core entity that is configured to generate a message to be broadcasted. The public warning system comprises a management entity configured to assign at least one device control command for controlling a warning device to the message to be broadcasted via at least one user service.

The main idea of the invention is to centralize controlling of all warning devices in a coverage area of the broadcast infrastructure by means of cell broadcasting since device control commands for controlling the warning devices are broadcasted by means of the broadcast infrastructure. The broadcast core entity generates the respective message to be broadcasted wherein the broadcast core entity receives the respective information from the management entity concerning the at least one device control command.

In fact, the 5G-based or LTE-based broadcast infrastructure capable of sending warning messages to users via one or more eNBs/transmitters is also used to control the warning devices. Hence, the broadcast infrastructure can support the deployment and operation of local warning devices such as sirens.

These warning devices are located at appropriate sites and just require power and reception of the messages broadcasted, namely the broadcast signal, via which the at least one device control command for controlling the warning devices is submitted. The at least one device control command may be used to switch the warning devices on or off and to control their behavior. This simplifies the operation and reduces the cost of the public warning system in general that is used to warn the civilization of emergency situations.

The management entity controls the warning devices via the respective user service. The respective user service may or may not be announced in the Service Announcement.

All warning devices in the coverage area of the broadcast infrastructure receive the message broadcasted by means of the user service by means of a respective receiver, namely a 5G- or LTE-based broadcast receiver.

The respective user service has a dedicated service class identifying itself as a warning device service so that the respective warning devices receive the information concerning the service class.

Accordingly, a large number of warning devices can be controlled with low latency and at once.

An aspect provides that the management entity is configured to assign the at least one device control command to the message at a given point in time, wherein the assignment is adaptable at any time. Hence, the management entity is generally enabled to adapt the device control command provided in the messages to be broadcasted. Therefore, updated controlling of the warning devices may be provided by adapting the respective assignment. In addition, further controlling information may be broadcasted, as different device control commands are broadcasted, e.g. in a subsequent manner. For instance, the warning devices are switched on (first device control command), then set to a certain operation mode (second device control command), and switched off (third device control command).

Another aspect provides that the public warning system comprises an operator interface via which access to the management entity is enabled to adapt the assignment, wherein the operator interface is configured to only grant access to an authority or an authorized entity. Since adaptions of the messages to be broadcasted can be done by means of the operator interface, the operator interface only grants access to an authority or an authorized entity. Accordingly, only authorities or authorized entities are allowed to modify or rather alter the device control command. Hence, it is avoided that unauthorized users are enabled to adapt the messages. In other words, network authorization is required to use the operator interface for having access to the management entity via which adaptions of the processing done by the broadcast core entity can be done, e.g. the respective assignment. For instance, the operator interface may be a REpresentational State Transfer Application Programming Interface (REST API) such as xMB-C / xMB-U, which requires network authorization.

According to a further aspect, the operator interface is configured to provide access to the broadcast core entity via the management entity. Accordingly, the messages to be broadcasted can be adapted accordingly, as the management entity controls the assignment of the device control command to the user service.

The public warning system may comprise at least one warning device configured to receive and process the message. Particularly, the warning device may comprise a 5G-based or LTE-based broadcast receiver that is configured to receive and process the message broadcasted by means of the 5G-based or LTE-based broadcast infrastructure. An optional middleware or application software running on the warning device detects the respective data contained in the (enriched) message broadcasted, which comprises the at least one device control command, namely control information about the respective behavior. In case the data is encrypted, the warning device is also enabled to decrypt the encrypted data in order to access the content of the data, namely the at least one device control command.

The warning devices are typically allowed to be operated only by (national) authorities or authorized entities like company authorities provided that the warning devices are located at company premises. Particularly, the respective warning device is an enterprise resource management entity or a building management entity or a private warning device such as a smoke detector. The respective warning device, e.g. the private warning device, may be triggered by an authorized broadcast message in case of emergency, for instance in case of a large (bush) fire.

Moreover, there might be gateways receiving the messages including the device control command, which trigger one or more company and/or private warning device(s), for instance via a wireless network protocols used for communication purposes, e.g. Wi-Fi. Hence, the gateways correspond to the warning devices since the gateways receive and process the message broadcasted. The device control command included in the message broadcasted instructs the respective gateways to communicate a warning message to other warning devices, particularly those unable to directly receive and process the message broadcasted.

A further aspect provides that the warning device is configured to be waked up by the message, thereby entering an active operational state. Hence, the warning device can be waked up remotely due to the message broadcasted, namely the message containing the device control command. Therefore, it is not necessary that an operator has to manually activate the warning device. Moreover, power consumption of the warning device can be reduced since the warning device is in a standby mode until it is waked up.

For instance, the warning device comprises a battery used as power source, which provides the respective power. This ensures that the warning device may be installed at a site where no power grid is available, e.g. on a mountain.

The management entity may be configured to adapt the assignment of the device control command to the data depending on a condition, particularly a geographical area affected. The respective device control command assigned to the user service may be chosen among different device control commands, which depends on certain conditions, e.g. the kind of danger and/or the area affected providing information about the intensity of the danger.

Moreover, the management entity may be configured to adapt the assignment of the device control command to the message such that the message is broadcasted to a smaller geographic area or a wider geographic area. This may be necessary in case the area affected varies. For instance, a flood enlarges such that warning devices in a wider geographic area have to be controlled accordingly. Alternatively, a flood may go back such that warning devices in a smaller geographic area have to be controlled.

According to a further aspect, the broadcast core entity is configured to enrich the message with data associated with geographical information of a geographical area affected. Hence, only a subset of all warning devices in the coverage area may be controlled based on the additional data, which is also called addressing.

Particularly, the warning device is configured to receive and to process the message broadcasted, and wherein the warning device is configured to only process the message in case the geolocation of the warning device matches with the geographical information. If the geographical information, e.g. geographical coordinates, is present and the warning devices have their own coordinates, namely their respective geolocations, the matching may be used to filter the addressed warning devices.

Another aspect provides that the message to be broadcasted is associated with a warning device service containing a file download session, in particular wherein at least one encrypted file is provided by the file download session. The warning device receiving the message is prompted to download the data encompassed in the message broadcasted, e.g. the encrypted data file. The encrypted file is internally processed by respective warning devices, wherein the encrypted file may be decrypted in order to obtain the at least one device control command included in the file. The at least one device control command obtained is processed internally such that the warning devices are controlled by means of the at least one device control command obtained. As mentioned above, the respective user service has a dedicated service class identifying itself as the warning device service so that the respective warning devices receive the information concerning the service class.

The message to be broadcasted comprises at least one unique ID of a warning device to address the dedicated warning device in the coverage area of the broadcast infrastructure. The unique ID is used for addressing purposes, as a match of the unique ID may trigger the control of individual warning device. In case, several unique IDs are provided, the dedicated warning devices in the coverage area can be controlled at once. Particularly, certain kinds of warning devices may be addressed accordingly, for instance optical warning devices and/or acoustic warning devices like sirens. Moreover, warning devices associated with a certain company can be addressed, for instance warning devices at a chemical park or similar.

The warning devices may also listen to Cell Broadcast (CB) warning messages, namely warning text messages provided by cell broadcast entities, which also may contain warning coordinates covering the area of their sites. This may be useful to wake up the warning devices accordingly.

Generally, warning devices such as sirens can be switched on and by updating the file contents, namely the device control command, can be switched off later

The invention further provides a method of broadcasting content by means of a public warning system. By means of a management entity, at least one device control command for controlling a warning device is assigned to a message to be broadcasted via at least one user service, thereby generating the message to be broadcasted by a broadcast infrastructure.

The respective message may correspond to an enriched message, as additional data is incorporated, namely the at least one device control command for controlling the warning devices. The message is generated by the broadcast core entity that is connected with the management entity. The broadcast core entity forwards the message generated to the broadcast infrastructure that broadcasts the respective messages towards the warning devices within the coverage area of the broadcast infrastructure.

The warning devices receive the messages and process them such that the respective device control command included in the message broadcasted is obtained, which controls each of the warning devices, e.g. switches the warning devices on, controls their behavior and/or switches the warning devices off.

An aspect provides that the message is broadcasted by means of a warning device service containing a file download session, in particular wherein at least one encrypted file is provided by the file download session. Hence, the warning device receiving the message is prompted to download the data broadcasted, e.g. the encrypted data file. The encrypted file is internally processed by respective warning devices, thereby decrypting the encrypted file in order to obtain the at least one device control command which is processed internally such that the warning device is controlled by means of the at least one device control command.

A further aspect provides that a warning text message to be broadcasted is provided by means of a cell broadcast entity, and wherein the warning text message is used to wake up the warning device. Hence, the warning devices may listen to Cell Broadcast (CB) warning messages, namely the warning text messages provided by cell broadcast entities. By listening to these messages, the warning devices may be waked up when receiving those warning text messages broadcasted by the (same) broadcast infrastructure.

According to another aspect, geographical information concerning a geographical area affected is included into the message by means of the broadcast core entity. Hence, only a subset of all warning devices in the coverage area may be controlled by the device control command due to the additional data added, which is also called addressing of the warning devices in the coverage area. Particularly, the warning device only processes the message received in case the geolocation of the warning device matches with the geographical information.

The respective public warning system may also comprise content provider entity configured to provide content. The broadcast core entity may be configured to process the content provided by the content provider entity. The management entity may be configured to assign the content to at least one user service, thereby generating a message to be broadcasted. Via the operator interface access to the management entity may be enabled to adapt the message.

Further, the respective public warning system may also comprise a cell broadcast entity configured to provide a warning text message to be broadcasted by means of the broadcast infrastructure. The broadcast core entity may be configured to process and combine the warning text message with information of the additional content provided by the content provider entity, thereby generating an enriched warning text message.

The broadcast core entity is configured to forward the respective message generated to the broadcast infrastructure such that the broadcast infrastructure is enabled to broadcast the respective message.

Besides the warning devices, the public warning system may also broadcast messages to user entities, e.g. all users in the coverage area of the broadcast infrastructure.

The users may correspond to mobile users that are located in the coverage area of the broadcasting infrastructure irrespective thereof if the users are subscribers to a certain (internet) service or not. Hence, all available users in the coverage area are informed automatically due to the cell broadcasting provided by the public warning system, as the messages are broadcasted to multiple users, e.g. mobile telephone users, in the coverage area at the same time.

The messages broadcasted may relate to short messages of a short message service (SMS). Put differently, the public warning system comprises a cell broadcast (CB) service, which is also known as Short Message Service-Cell Broadcast (SMS-CB) or Cell Broadcast Short Message Service (CB SMS).

Generally, the (cell) broadcasting differs to typical short message services in that (cell) broadcasting concerns a one-to-many geo-targeted and geo-fenced messaging service rather than a point-to-point messaging service. This is achieved by directing the messages to be broadcasted to radio cells (transmitters) rather than to a user entity, e.g. a user end device like a mobile, a smartphone, a tablet or similar.

In other words, the public warning system comprises a cell broadcast system (CBS) that is generally enabled to broadcast the respective messages to all users located in the coverage area of the broadcasting infrastructure by using several cells, e.g. up to 1 million cells in less than 10 seconds, thereby reaching millions of users.

According to another example, the broadcasting infrastructure may have a cost-effectively single High-Power High Tower (HPHT) transmitter may be used that covers a metropolitan region with millions of users.

Generally, the broadcasting infrastructure may comprise at least one redundant transmitter as fallback option in case of failure of the intended transmitter.

Accordingly, the civilization can be warned by means of text messages that use the cell broadcast system (CBS) based on a cost-effective and reliable manner LTE-based or rather 5G-based broadcast infrastructure that comprises respective transmitters, namely LTE- or 5G-based transmitters.

As mentioned above, the respective broadcast infrastructure uses the cell broadcast system (CBS) to reach a large number of users in the affected area. The respective users do not only receive the warning text message, but also at least information concerning the additional content that may be provided by a separate entity, namely the content provider entity. Hence, further information about the respective emergency situation can be provided so as to warn the civilization more effectively rather than only the text provided by the cell broadcast entity.

The public warning system is fail-safe so as to ensure that the public warning system is still active in case of a blackout. The 5G-based or LTE-based broadcast infrastructure of the public warning system corresponds to an additional infrastructure with respect to a regular network infrastructure used for regular internet services. The regular network infrastructure might be partially or even completely down due to the respective circumstances that come together with the danger, for instance bad weather or other catastrophic conditions like flood and/or thunderstorms.

In other words, the broadcast infrastructure for transmitting the respective messages is still working even though a parallel mobile network infrastructure for regular internet services has broken down. Obviously, the broadcast infrastructure of the public warning system may also be operated in parallel with the regular network infrastructure used for the regular services. In any case, the broadcast infrastructure of the mobile network ensures that content is broadcasted to all users and/or warning devices in the coverage area in contrast to services of a regular mobile network infrastructure that is limited to the respective subscribers of the service.

In general, a 5G-based or LTE-based network may be provided that comprises the 5G-based or LTE-based broadcast infrastructure (broadcast network) for broadcasting the (enriched) warning text messages as well as the regular mobile network infrastructure used for regular internet services.

Contrary to the regular network infrastructure, the broadcast infrastructure relates to a unidirectional transmission, as the messages are only broadcasted without receiving any feedback via an uplink channel or similar.

The broadcast core entity may process different content of several content provider entities. Different additional valuable content may be provided simultaneously or rather in a subsequent manner in order to inform/warn the users in a most reliable and effective manner concerning an upcoming danger. For instance, the different content may be provided in an alternating manner, e.g. periodically, thereby ensuring that the users receive different information provided by the different content provider entities.

In general, the public warning system may comprise several cell broadcast entities (CBEs) that are connected with the broadcast core entity (BCE), wherein the several cell broadcast entities may provide different warning text messages, e.g. the same text in different languages and/or different texts. The broadcast core entity is enabled to process the different warning text messages received, particularly simultaneously.

As already mentioned above, the public warning system may comprise several content provider entities that are connected with the broadcast core entity, wherein the several content provider entities provide different content. The broadcast core entity is enabled to process the different warning text messages received, particularly simultaneously.

For instance, the broadcast core entity may comprise several cell broadcast cores (CBCs), wherein each of the several cell broadcast cores is configured to generate a dedicated enriched warning text message to be broadcasted by combining a warning text message with a respective additional content. Accordingly, the broadcast core entity is enabled to provide several enriched warning text messages simultaneously, particularly wherein the number of different enriched warning text messages is equal to the number of cell broadcast cores included in the broadcast core entity.

The operator of the content provider entity and the operator of the cell broadcast entity may be different or even the same.

The additional content provided by the at least one content provider entity may also be directly broadcasted rather than broadcasting the link.

Generally, the term "entity" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

It is to be understood that an entity may be established by a single electronic device or even by a portion of a single electronic device. However, an entity may also be established by a plurality of electronic devices that are interconnected, e.g. a network of electronic devices.

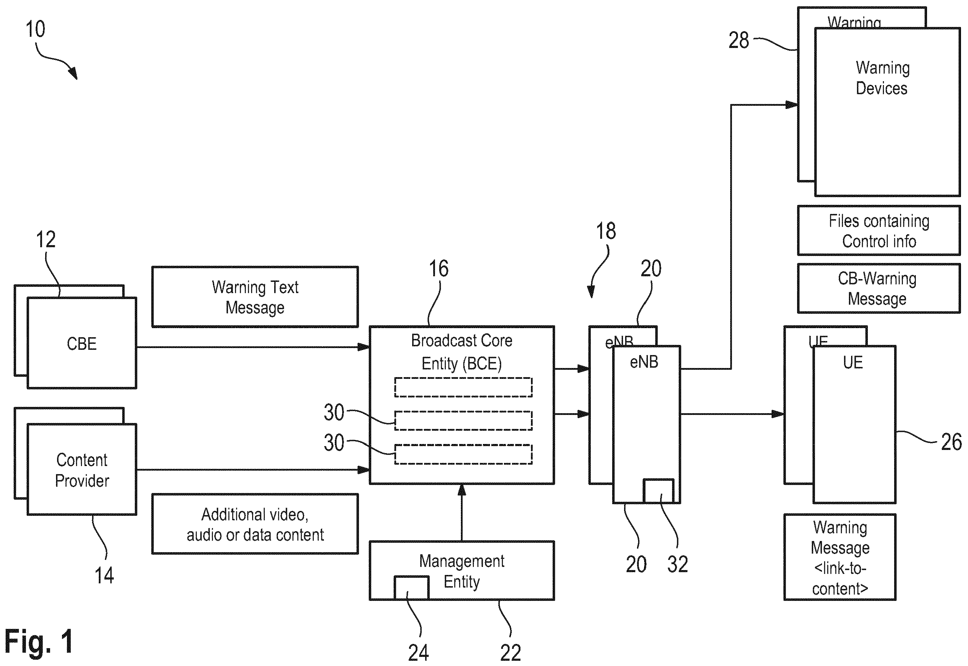

In the drawings, Figure 1 schematically shows an overview of a public warning system according to a preferred embodiment of the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when greater than three elements are listed. In other words, the term "at least one of A and B" generally means "A and/or B", namely "A" alone, "B" alone or "A and B".

In Figure 1, a public warning system 10 is shown that is also called cell broadcast system (CBS) or civilization warning system.

The public warning system 10 comprises at least one cell broadcast entity (CBE) 12 that provides a warning text message to be broadcasted in order to warn the civilization with respect to a danger like a natural disaster, particularly a geological disaster, a hydrological disaster, a meteorological disaster or similar.

In the shown embodiment, the public warning system 10 also comprises at least one content provider entity 14 that provides content to be broadcasted, for instance additional content like video content, audio content and/or data content.

The public warning system 10 also comprises a broadcast core entity 16 that is connected with the cell broadcast entity 12 and the content provider entity 14 in a signal transmitting manner such that the broadcast core entity 16 is configured to communicate with the cell broadcast entity 12 and the content provider entity 14, thereby receiving or at least accessing the warning text message and the additional content.

In addition, the public warning system 10 comprises a broadcast infrastructure 18 that corresponds to a 5G-based broadcast infrastructure or an LTE-based broadcast infrastructure, e.g. a broadcast infrastructure using telecommunication standards according to the fourth and fifth generation.

In the shown embodiment, the respective broadcast infrastructure 18 comprises two transmitters 20 that are established as radio (base) stations, e.g. evolved NodeBs (eNBs).

Accordingly, the broadcast infrastructure 18 is configured to broadcast content to all users in a coverage area of the broadcast infrastructure 18 irrespective thereof if the respective users are subscribers to a certain (internet) service or not.

Generally, the broadcast core entity 16 is configured to generate a message to be broadcasted by means of the broadcast infrastructure 18.

For instance, the broadcast core entity 16 is enabled to combine information about the additional content, particularly the additional content itself, to the warning text message provided by the cell broadcast entity 12, thereby generating the message to be broadcasted which corresponds to an enriched warning text message.

The respective combining may be done by at least one session ID, e.g. link session ID.

The link session ID may be part of a link included into the warning text message by means of the broadcast core entity 16. The respective link added to the warning text message corresponds the information of the additional content.

The respective broadcasting of the content can generally start before, at (simultaneously) or after the warning text message has been broadcasted.

In the shown embodiment, the public warning system 10 further comprises a management entity 22 that is associated with the broadcast core entity 16.

The management entity 22 is generally enabled to manage the processing done by the broadcast core entity 16 when handling the respective information obtained from the cell broadcast entity 12 and the content provider entity 14. Thus, the management entity 22 is enabled to control the broadcast core entity 16, e.g. to do settings of the broadcast core entity 16.

For instance, the management entity 22 assigns the content to at least one user service, thereby generating the message to be broadcasted by means of the broadcast infrastructure 18. The respective assignment is done at a given point in time. However, the assignment is adaptable at any time by means of the management entity 22.

Hence, the message generated by the broadcast core entity 16 can be adapted by means of the management entity 22 accordingly.

The management entity 22 may authorize the respective content provider entities 14 to broadcast the additional content in relation to the session ID.

As mentioned above, the public warning system 10 may comprise several authorized content provider entities 14 that may provide different content, e.g. video content, audio content, and/or data content, particularly a behavioral recommendation and/or a live video. Hence, the respective content provider entities 14 may relate to a television station, a broadcasting company, civil protection, a fire department and/or a police department.

Accordingly, the broadcast core entity 16 is enabled to pass the respective additional content to the respective session having a dedicated link session ID, particularly based on the setting done by means of the management entity 22.

In other words, the management entity 22 coordinates which content is broadcasted on which session. Hence, the management entity 22 is generally enabled to switch the content provided in the messages broadcasted from one source to another source, namely among the different content provider entities 14.

The public warning system 10 also comprises an operator interface 24 via which access to the management entity 22 is enabled. Hence, the processing of the broadcast core entity 16 can be adapted via the operator interface 24.

Generally, the access to the management entity 22 provided by the operator interface 24 may also provide access to the broadcast core entity 16 or even the cell broadcast entity 12.

The cell broadcast entity 12, the broadcast core entity 16, and/or the management entity 22 may relate to the same authority or different authorities, for instance civil protection, a fire department and/or a police department.

In the shown embodiment, the operator interface 24 is provided by the management entity 22 itself. Even though the operator interface 24 is shown as being part of the management entity 22, the operator interface 24 may generally be provided in a separate manner.

Since adaptions of the messages to be broadcasted can be done by means of the operator interface 24, the operator interface 24 only grants access to an authority or an authorized entity. Thus, it is avoided that unauthorized users are enabled to adapt the messages.

In other words, network authorization is required to use the operator interface 24 for having access to the management entity 24 via which adaptions of the processing done by the broadcast core entity 16 can be done.

For instance, the operator interface 24 may be a Representational State Transfer Application Programming Interface (REST API) such as xMB-C / xMB-U, which requires network authorization.

Moreover, the public warning system 10 according to the embodiment shown in Figure 1 comprises user entities 26 as well as warning devices 28.

The user entities 26 may be established by smartphones, mobile phones, tablets and/or televisions.

In contrast thereto, the warning devices 28 are typically allowed to be operated by (national) authorities or authorized entities like company authorities provided that the warning devices 28 are located at company premises. Hence, the warning devices 28 may relate to enterprise resource management entities or rather building management entities.

The respective broadcast infrastructure 18 is generally configured to broadcast the respective messages received from the broadcast core entity 16 to the user entities 26 and the warning devices 28 which in turn are enabled to receive the messages and process them accordingly, thereby outputting information.

As mentioned above, the respective messages to be broadcasted by means of the broadcast infrastructure 18 are generated by the broadcast core entity 16 that is configured to process the different information obtained from the different entities connected thereto, e.g. the warning text messages received via the cell broadcast entities 12, the content received via the different content provider entities 14 and/or information/data received from the management entity 22.

According to a first example, the broadcast core entity 16 is enabled to receive and process the warning text message provided by the at least one cell broadcast entity 12 and the additional content provided by the at least one content provider entity 14 so as to generate the at least one enriched warning text message to be broadcasted.

Generally, several warning text messages and several additional contents may be processed simultaneously by the broadcast core entity 16, thereby generating several enriched warning text messages simultaneously. Particularly, these several enriched warning text messages are broadcasted by means of different cells, e.g. different parts of the broadcasting infrastructure 18.

For this purpose, the broadcast core entity 16 may comprise several cell broadcast cores 30 as indicated in Figure 1.

The enriched warning text message(s) generated may comprise the text of the warning text message, which is enriched by the broadcasting link to the respective content.

Further, the broadcast core entity 16 is configured to forward the enriched warning text message(s) generated to the broadcast infrastructure 18 such that the broadcast infrastructure 18 is enabled to broadcast the enriched warning text message(s) to the user entities 26.

The user entities 26 are enabled to receive the enriched warning text messages, wherein the text of the warning text message may be displayed on the user entities 26. In addition, the link to the additional content may be displayed so that a user of the respective user entities 26 is enabled to click on the link in order to obtain the additional content, e.g. video content, audio content and/or data content.

For instance, the user may be directed to a web page on its user entity 26 when clicking on the respective link that is comprised in the text of the enriched warning text message processed by the user entity 26.

Generally, the additional content may encompass live information like a live video or behavioral recommendations so that the user is informed how to react probably due to the respective circumstances of the future danger.

In addition, the broadcast core entity 16 may include data associated with geographical information of a geographical area affected into the enriched warning text message to be broadcasted when generating the respective message.

The additional information included may not be directly visible to the user of the user entities 26, but it is encompassed in the respective enriched warning text message such that the user entities 26 have access to the corresponding data when processing the enriched warning text message received.

The user entities 26 may process the enriched warning text messages received, wherein the user entities 26 only display the text of the respective warning text messages and the link or rather the additional content directly in case the geolocation of the user entity 26 matches with the geographical information that has been included by means of the broadcast core entity 16 previously.

Accordingly, a geo-targeted and geo-fenced messaging is enabled by the broadcasting service of the public warning system 10.

Therefore, it is ensured that only a certain subset of all users in the respective coverage area of the broadcast infrastructure 18 is warned actively in case these users are effectively exposed to the critical situation. Superfluous warnings of users not endangered can be avoided effectively such that those users do not get used to unnecessary warnings.

Further, the public warning system 10 ensures that the text of the warning text message can be adapted appropriately such that updated information concerning the respective circumstances can be broadcasted. Therefore, the operator interface 24 may be used such that an authority or an authorized entity is enabled to adapt the text of the respective warning text message to be displayed on the user entities 26.

The respective transmitters 20 may comprise an emergency power supply 32 which ensures that the transmitters 20 are still operable even though a power grid has broken down, which affects the regular network infrastructure used for regular internet services.

Furthermore, the entire broadcast infrastructure 18 may be an additional one to the regular network infrastructure. This ensures that the messages to be broadcasted can be still broadcasted even though the remaining mobile network has broken down.

The broadcast core entity 16 ensures that the content provided by the different content provider entities 18, which shall be broadcasted to the users, is assigned to at least one user service, thereby generating the message to be broadcasted by the broadcast infrastructure 18.

The user service relates to a temporary mobile group identifier (TMGI) such that the management entity 22 authorizes different content provider entities 14 to broadcast the additional content.

The broadcast core entity 16 receives the different additional content from the several content provider entities 14, wherein the broadcast core entity 16 is enabled to pass the respective additional content to the respective session with the associated session ID. The management entity 22 therefore coordinates which additional content is broadcasted on which session. Thus, it is possible to switch between the respective contents of the different content provider entities 14.

In general, the operator interface 24 allows to adapt the respective assignment of the data to be broadcasted to the at least one user session based on the ID as mentioned above. Therefore, the respective additional content to be broadcasted with the warning text message can be adapted by means of the management entity 22.

In general, the management entity 22 assigns the content to be broadcasted to the at least one user service at a given point in time, wherein the respective assignment can be adapted at any time via the operator interface 24.

The assignment of the data to be broadcasted to the at least one user service may depend on a respective condition, for instance a geographical area affected. The respective assignment can be adapted manually via the operator interface 24 or rather automatically based on data associated with geographical information.

For instance, the management entity 22 is enabled to adapt the assignment of the content to the at least one user service such that the message is broadcasted to a smaller geographic area or a wider geographic area. This means that the data associated with the geographic information concerning the geographical area affected is altered accordingly.

As mentioned above, the user entities 26 that receive the enriched warning text messages will output the respective information only in case their geolocation matches with the geographic information submitted by means of the enriched warning text messages in order to avoid false warnings.

Furthermore, the broadcast core entity 16 is also configured to generate a message to be broadcasted by means of the broadcasting infrastructure 18 to the warning devices 28.

For this purpose, the broadcast core entity 16 receives data from the management entity 22 to be included into the message to be broadcasted.

In fact, the management entity 22 assigns at least one device control command for controlling the warning devices 28 to the message to be broadcasted via at least one user service, e.g. a specific warning device service. Thus, the broadcast core entity 16 enriches the message to be broadcasted with data associated with the at least one device control command. The respective data may be encrypted, thereby ensuring data security.

The respective user service has a dedicated service class identifying itself as the warning device service so that the respective warning devices 28 receive the information concerning the service class.

All warning devices 28 in the coverage area of the broadcast infrastructure 18 receive the respective user service by means of a 5G-based or LTE-based broadcast receiver associated with the respective warning devices 28.

An optional middleware or application software running on the warning devices 28 detects the respective data contained in the enriched message broadcasted, which comprises the at least one device control command, namely the control information about their respective behavior. In case the data is encrypted, the warning devices 28 are also enabled to decrypt the encrypted data so as to access the content of the data, namely the at least one device control command.

The respective message broadcasted may be associated with the warning device service that contains a file download session with at least one encrypted file so that the warning devices 28 receiving the respective messages broadcasted start a file download in order to receive the encrypted data. The encrypted data is decrypted by means of the warning devices 28 themselves in order to obtain the device control command and process the device control command respectively.

In addition, the warning devices 28 may be configured to be waked up by the message received in oder to enter an active operational state in which the respective data of the message are decrypted accordingly for being processed further. Thus, the broadcast infrastructure 18 is enabled to wake up the different warning devices 28 in its coverage area accordingly.

Alternatively or additionally, the warning devices 28 may also be waked up by means of the (enriched) warning text messages broadcasted by the broadcast infrastructure 18, namely the CB-warning messages as indicated in Figure 1.

Once the warning devices 28 have been waked up, the warning devices 28 are enabled to receive and process the messages associated with the file download session so as to download and decrypt the data containing the at least one device control command.

Furthermore, the broadcast core entity 16 may enrich the message to be broadcasted with data associated with geographical information of a geographical area affected. The respective warning devices 28 may receive and process the message broadcasted, wherein the warning devices 28 only process the message in case the geolocation of the warning device 28 matches with the geographical information.

The operator interface 24 may grant access to the management entity 22 so as to adapt the respective assignment of the device control command for controlling the respective warning devices 28 to the message to be broadcasted. The operator interface 24 may only grant access to an authority or an authorized entity.

Further, the message broadcasted comprises at least one unique ID of a dedicated warning device 28 such that only the dedicated warning device 28 is addressed in the coverage area of the broadcast infrastructure 18. Thus, it is ensured that only a certain number, particularly defined warning devices 28, are controlled in the respective manner in order to warn only a certain critical infrastructure, for instance a certain sub-area of the entire coverage area of the broadcast infrastructure 18.

The management entity 22 is enabled to adapt the assignment of the device control command to the message to be broadcasted such that the message is broadcasted to a smaller geographic area or wider geographic area, thereby adapting the number of warning devices 28 to be controlled accordingly. Again, this ensures that superfluous or unnecessary warnings are omitted effectively.

Generally, an effective and informative public warning system 10 is provided that ensures that the civilization is warned and informed appropriately concerning any upcoming dangers.

Certain embodiments disclosed herein, particularly the respective entities, utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A public warning system for broadcasting content, wherein the public warning system (10) comprises a 5G-based or LTE-based broadcast infrastructure (18) configured to broadcast content to all warning devices (28) in a coverage area of the broadcast infrastructure (18), wherein the public warning system (10) comprises a broadcast core entity (16) that is configured to generate a message to be broadcasted, and wherein the public warning system (10) comprises a management entity (22) configured to assign at least one device control command for controlling a warning device (28) to the message to be broadcasted via at least one user service, wherein the at least one user service relates to a temporary mobile group identifier,
the public warning system (10) being **characterized in that**
the broadcast infrastructure (18) is different from a mobile network infrastructure for regular internet services, and
wherein the message to be broadcasted comprises at least one unique ID of a warning device (28) to address the dedicated warning device (28) in the coverage area of the broadcast infrastructure (18).

2. The public warning system according to claim 1, wherein the management entity (22) is configured to assign the at least one device control command to the message at a given point in time, and wherein the assignment is adaptable at any time.

3. The public warning system according to claim 1 or 2, wherein the public warning system (10) comprises an operator interface (24) via which access to the management entity (22) is enabled to adapt the assignment, and wherein the operator interface (24) is configured to only grant access to an authority or an authorized entity.

4. The public warning system according to any of the preceding claims, wherein the public warning system (10) comprises at least one warning device (28) configured to receive and process the message, in particular wherein the warning device (28) is an enterprise resource management entity or a building management entity or a private warning device such as a smoke detector.

5. The public warning system according to any of the preceding claims, wherein the warning device (28) is configured to be waked up by the message, thereby entering an active operational state.

6. The public warning system according to any of the preceding claims, wherein the management entity (22) is configured to adapt the assignment of the device control command to the data depending on a condition, particularly a geographical area affected.

7. The public warning system according to any of the preceding claims, wherein the management entity (22) is configured to adapt the assignment of the device control command to the message such that the message is broadcasted to a smaller geographic area or a wider geographic area.

8. The public warning system according to any of the preceding claims, wherein the broadcast core entity (16) is configured to enrich the message with data associated with geographical information of a geographical area affected.

9. The public warning system according to claim 4 and claim 8, wherein the warning device (28) is configured to receive and to process the message broadcasted, and wherein the warning device (28) is configured to only process the message in case the geolocation of the warning device (28) matches with the geographical information.

10. The public warning system according to any of the preceding claims, wherein the message to be broadcasted is associated with a warning device service containing a file download session, in particular wherein at least one encrypted file is provided by the file download session.

11. A method of broadcasting content by means of a public warning system (10), wherein, by means of a management entity (22), at least one device control command for controlling a warning device (28) is assigned to a message to be broadcasted via at least one user service, thereby generating the message to be broadcasted by a broadcast infrastructure (18), wherein the at least one user service relates to a temporary mobile group identifier,
the method being **characterized in that**
the broadcast infrastructure (18) is different from a mobile network infrastructure for regular internet services, and
wherein the message to be broadcasted comprises at least one unique ID of a warning device (28) to address the dedicated warning device (28) in the coverage area of the broadcast infrastructure (18).

12. The method according to claim 11, wherein the message is broadcasted by means of a warning device service containing a file download session, in particular wherein at least one encrypted file is provided by the file download session.

13. The method according to claim 11 or 12, wherein a warning text message to be broadcasted is provided by means of a cell broadcast entity (12), and wherein the warning text message is used to wake up the warning device (28).

14. The method according to any of claims 11 to 13, wherein geographical information concerning a geographical area affected is included into the message by means of the broadcast core entity (16).

## Patentansprüche

1. Öffentliches Warnsystem zum Rundsenden von Inhalten, wobei das öffentliche Warnsystem (10) eine 5G-basierte oder LTE-basierte Rundsendungsinfrastruktur (18), die konfiguriert ist, um Inhalte an alle Warnvorrichtungen (28) in einem Abdeckungsbereich der Rundsendungsinfrastruktur (18) rundzusenden, umfasst, wobei das öffentliche Warnsystem (10) eine Rundsendungskernentität (16), die konfiguriert ist, um eine rundzusendende Nachricht zu erzeugen, umfasst, und wobei das öffentliche Warnsystem (10) eine Verwaltungsentität (22), die konfiguriert ist, um mindestens einen Vorrichtungssteuerbefehl zum Steuern einer Warnvorrichtung (28) der rundzusendenden Nachricht über mindestens einen Benutzerdienst zuzuweisen, umfasst, wobei sich der mindestens eine Benutzerdienst auf einen temporären mobilen Gruppenbezeichner bezieht,
wobei das öffentliche Warnsystem (10) **dadurch gekennzeichnet ist, dass**
sich die Rundsendungsinfrastruktur (18) von einer Mobilnetzinfrastruktur für reguläre Internetdienste unterscheidet, und
wobei die rundzusendende Nachricht mindestens eine eindeutige ID einer Warnvorrichtung (28) umfasst, um die dedizierte Warnvorrichtung (28) in dem Abdeckungsbereich der Rundsendungsinfrastruktur (18) zu adressieren.

2. Öffentliches Warnsystem nach Anspruch 1, wobei die Verwaltungsentität (22) konfiguriert ist, um den mindestens einen Vorrichtungssteuerbefehl der Nachricht zu einem gegebenen Zeitpunkt zuzuweisen, und wobei die Zuweisung jederzeit anpassbar ist.

3. Öffentliches Warnsystem nach Anspruch 1 oder 2, wobei das öffentliche Warnsystem (10) eine Bedienerschnittstelle (24), über die Zugriff auf die Verwaltungsentität (22) ermöglicht wird, um die Zuweisung anzupassen, umfasst, und wobei die Bedienerschnittstelle (24) konfiguriert ist, um nur einer Behörde oder einer autorisierten Entität Zugriff zu gewähren.

4. Öffentliches Warnsystem nach einem der vorstehenden Ansprüche, wobei das öffentliche Warnsystem (10) mindestens eine Warnvorrichtung (28), die konfiguriert ist, um die Nachricht zu empfangen und zu verarbeiten, umfasst, insbesondere wobei die Warnvorrichtung (28) eine Unternehmensressourcenverwaltungsentität oder eine Gebäudeverwaltungsentität oder eine private Warnvorrichtung wie ein Rauchmelder ist.

5. Öffentliches Warnsystem nach einem der vorstehenden Ansprüche, wobei die Warnvorrichtung (28) konfiguriert ist, um durch die Nachricht aufgeweckt zu werden, wodurch sie in einen aktiven Betriebszustand eintritt.

6. Öffentliches Warnsystem nach einem der vorstehenden Ansprüche, wobei die Verwaltungsentität (22) konfiguriert ist, um die Zuweisung des Vorrichtungssteuerbefehls den Daten abhängig von einer Bedingung, insbesondere von einem betroffenen geografischen Bereich, anzupassen.

7. Öffentliches Warnsystem nach einem der vorstehenden Ansprüche, wobei die Verwaltungsentität (22) konfiguriert ist, um die Zuweisung des Vorrichtungssteuerbefehls der Nachricht derart anzupassen, dass die Nachricht zu einem kleineren geografischen Bereich rundgesendet wird.

8. Öffentliches Warnsystem nach einem der vorstehenden Ansprüche, wobei die Rundsendungskernentität (16) konfiguriert ist, um die Nachricht mit Daten, die mit geographischen Informationen eines betroffenen geographischen Bereichs verknüpft sind, anzureichern.

9. Öffentliches Warnsystem nach den Ansprüchen 4 und 8, wobei die Warnvorrichtung (28) konfiguriert ist, um die rundgesendete Nachricht zu empfangen und zu verarbeiten, und wobei die Warnvorrichtung (28) konfiguriert ist, um die Nachricht nur zu verarbeiten, falls die Geolokalisierung der Warnvorrichtung (28) mit den geografischen Informationen übereinstimmt.

10. Öffentliches Warnsystem nach einem der vorstehenden Ansprüche, wobei die rundzusendende Nachricht mit einem Warnvorrichtungsdienst, der eine Datei-Download-Sitzung enthält, verknüpft ist, insbesondere wobei mindestens eine verschlüsselte Datei durch die Datei-Download-Sitzung bereitgestellt wird.

11. Verfahren zum Rundsenden von Inhalten mittels eines öffentlichen Warnsystems (10), wobei mittels einer Verwaltungsentität (22) mindestens ein Vorrichtungssteuerbefehl zum Steuern einer Warnvorrichtung (28) einer rundzusendenden Nachricht über mindestens einen Benutzerdienst zugewiesen ist, wodurch die durch eine Rundsendungsinfrastruktur (18) rundzusendende Nachricht erzeugt wird, wobei sich der mindestens eine Benutzerdienst auf einen temporären mobilen Gruppenbezeichner bezieht,
wobei das Verfahren **dadurch gekennzeichnet ist, dass**
sich die Rundsendungsinfrastruktur (18) von einer Mobilnetzinfrastruktur für reguläre Internetdienste unterscheidet, und
wobei die rundzusendende Nachricht mindestens eine eindeutige ID einer Warnvorrichtung (28) umfasst, um die dedizierte Warnvorrichtung (28) in dem Abdeckungsbereich der Rundsendungsinfrastruktur (18) zu adressieren.

12. Verfahren nach Anspruch 11, wobei die Nachricht mittels eines Warnvorrichtungsdienstes, der eine Datei-Download-Sitzung enthält, rundgesendet wird, insbesondere wobei mindestens eine verschlüsselte Datei durch die Datei-Download-Sitzung bereitgestellt wird.

13. Verfahren nach Anspruch 11 oder 12, wobei eine rundzusendende Warntextnachricht mittels einer Funkzellenrundsendungsentität (12) bereitgestellt wird, und wobei die Warntextnachricht verwendet wird, um die Warnvorrichtung (28) aufzuwecken.

14. Verfahren nach einem der Ansprüche 11 bis 13, wobei geografische Informationen hinsichtlich eines betroffenen geografischen Bereichs mittels der Rundsendungskernentität (16) in die Nachricht eingeschlossen werden.

## Revendications

1. Système d'avertissement public permettant de diffuser un contenu, dans lequel le système d'avertissement public (10) comprend une infrastructure de diffusion (18) basée sur 5G ou basée sur LTE configurée pour diffuser un contenu à tous les dispositifs d'avertissement (28) dans une zone de couverture de l'infrastructure de diffusion (18), dans lequel le système d'avertissement public (10) comprend une entité centrale de diffusion (16) qui est configurée pour générer un message à diffuser, et dans lequel le système d'avertissement public (10) comprend une entité de gestion (22) configurée pour attribuer au moins une instruction de commande de dispositif permettant de commander un dispositif d'avertissement (28) au message à diffuser par l'intermédiaire d'au moins un service d'utilisateur, dans lequel l'au moins un service d'utilisateur se rapporte à un identificateur de groupe mobile temporaire,
le système d'avertissement public (10) étant **caractérisé en ce que**
l'infrastructure de diffusion (18) est différente d'une infrastructure de réseau mobile destinée à des services Internet ordinaires, et
dans lequel le message à diffuser comprend au moins un identificateur unique d'un dispositif d'avertissement (28) pour adresser le dispositif d'avertissement (28) dédié dans la zone de couverture de l'infrastructure de diffusion (18).

2. Système d'avertissement public selon la revendication 1, dans lequel l'entité de gestion (22) est configurée pour attribuer l'au moins une instruction de commande de dispositif au message à un point donné dans le temps, et dans lequel l'attribution est adaptable à n'importe quel moment.

3. Système d'avertissement public selon la revendication 1 ou 2, dans lequel le système d'avertissement public (10) comprend une interface opérateur (24) par l'intermédiaire de laquelle l'entité de gestion (22) est habilitée à adapter l'attribution, et dans lequel l'interface opérateur (24) est configurée pour n'accorder l'accès qu'à une autorité ou à une entité autorisée.

4. Système d'avertissement public selon l'une quelconque des revendications précédentes, dans lequel le système d'avertissement public (10) comprend au moins un dispositif d'avertissement (28) configuré pour recevoir et traiter le message, en particulier dans lequel le dispositif d'avertissement (28) est une entité de gestion de ressources d'entreprise ou une entité de gestion de bâtiment ou un dispositif d'alerte privé tel qu'un détecteur de fumée.

5. Système d'avertissement public selon l'une quelconque des revendications précédentes, dans lequel le dispositif d'avertissement (28) est configuré pour être réveillé par le message, en entrant de ce fait dans un état opérationnel actif.

6. Système d'avertissement public selon l'une quelconque des revendications précédentes, dans lequel l'entité de gestion (22) est configurée pour adapter l'attribution de l'instruction de commande de dispositif aux données en dépendance d'une condition, en particulier une zone géographique affectée.

7. Système d'avertissement public selon l'une quelconque des revendications précédentes, dans lequel l'entité de gestion (22) est configurée pour adapter l'attribution de l'instruction de commande de dispositif au message de telle sorte que le message est diffusé vers une zone géographique plus petite ou une zone géographique plus grande.

8. Système d'avertissement public selon l'une quelconque des revendications précédentes, dans lequel l'entité centrale de diffusion (16) est configurée pour enrichir le message avec des données associées à des informations géographiques d'une zone géographique affectée.

9. Système d'avertissement public selon la revendication 4 et la revendication 8, dans lequel le dispositif d'avertissement (28) est configuré pour recevoir et pour traiter le message diffusé, et dans lequel le dispositif d'avertissement (28) est configuré pour ne traiter le message que dans un cas où la géolocalisation du dispositif d'avertissement (28) concorde avec les informations géographiques.

10. Système d'avertissement public selon l'une quelconque des revendications précédentes, dans lequel le message à diffuser est associé à un service de dispositif d'avertissement contenant une session de téléchargement de fichier, en particulier dans lequel au moins un fichier crypté est fourni par la session de téléchargement de fichier.

11. Procédé de diffusion de contenu au moyen d'un système d'avertissement public (10), dans lequel, au moyen d'une entité de gestion (22), au moins une instruction de commande de dispositif permettant de commander un dispositif d'avertissement (28) est attribuée à un message à diffuser par l'intermédiaire d'au moins un service d'utilisateur, en générant de ce fait le message à diffuser par une infrastructure de diffusion (18), dans lequel l'au moins un service d'utilisateur se rapporte à un identificateur de groupe mobile temporaire,
le procédé étant **caractérisé en ce que**
l'infrastructure de diffusion (18) est différente d'une infrastructure de réseau mobile destinée à des services Internet ordinaires, et
dans lequel le message à diffuser comprend au moins un identificateur unique d'un dispositif d'avertissement (28) pour adresser le dispositif d'avertissement (28) dédié dans la zone de couverture de l'infrastructure de diffusion (18).

12. Procédé selon la revendication 11, dans lequel le message est diffusé au moyen d'un service de dispositif d'avertissement contenant une session de téléchargement de fichier, en particulier dans lequel au moins un fichier crypté est fourni par la session de téléchargement de fichier.

13. Procédé selon la revendication 11 ou 12, dans lequel un message textuel d'avertissement à diffuser est fourni au moyen d'une entité de diffusion de cellule (12), et dans lequel le message textuel d'avertissement est utilisé pour réveiller le dispositif d'avertissement (28).

14. Procédé selon l'une quelconque des revendications 11 à 13, dans lequel des informations géographiques concernant une zone géographique affectée sont incluses dans le message au moyen de l'entité centrale de diffusion (16).
